# EUROPEAN PATENT APPLICATION

(11) **EP 1 091 518 A2**
(43) Date of publication of application: **11.04.2001**
(21) Application number: 00121289.3
(22) Date of filing: 06.10.2000
(51) Int. Cl.: H04L 1/24, H04L 1/20

(54) **Apparatus and method for measuring bit errors**

(30) Priority: 06.10.1999 JP 28516999
(71) Applicant: Advantest Corporation, Tokyo 179-0071 (JP)
(72) Inventor: Shimawaki, Kazuhiro, Advantest Corporation, Tokyo 179-0071 (JP)
(74) Representative: Hoffmann, Eckart, Dipl.-Ing.

(57) **Abstract**

A bit stream of reference data and a bit stream of input data are verified against each other on a bit-by-bit basis, and each time an error bit is detected, a bit position information which prevails at that time in a reference data generator is fetched. The bit pattern of the reference data is continuously displayed on a pattern display section 33, and a mark (or a hatched indication) is applied to the error bit. The bit position corresponding to the left end of each row of bit pattern display is displayed in a typical bit position display section 34.

## Description

### BACKGROUND OF THE INVENTION

The present invention relates to an apparatus for and a method of measuring bit errors which may occur in a transmission path for example.

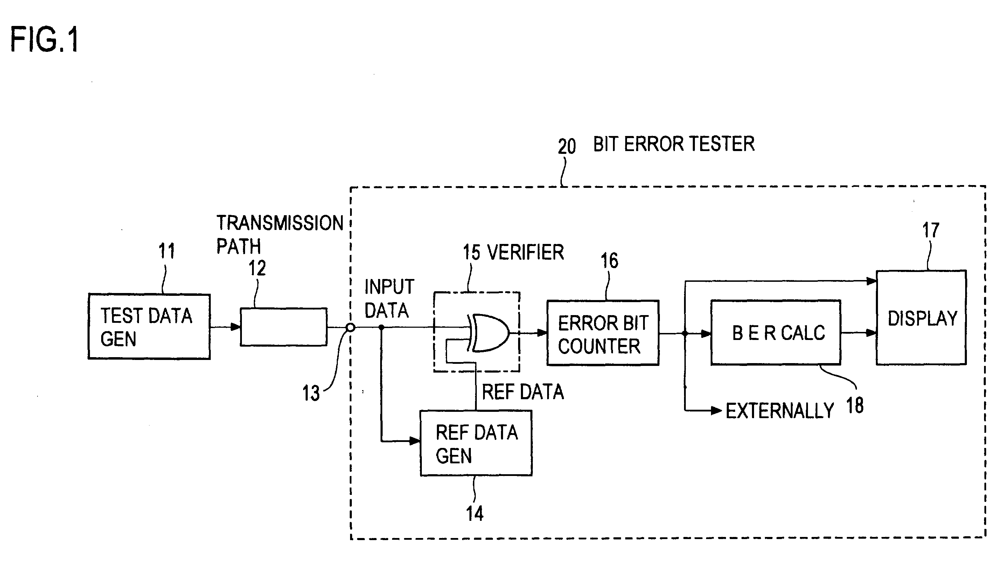

Fig. 1 shows a conventional bit error tester. A test data generator 11 may comprise a pseudo-random binary sequence (PRBS) generator which is arranged, for example, to form an exclusive logical sum of an output of a shift register and an output from an intermediate stage of the shift register and to feed back the sum to the input, or a random access memory (RAM) storing a series of bit patterns which are selected for delivery in response to an address signal which is sequentially input. Test data (bit stream) generated by the test data generator 11 is fed, for example, to a transmission path 12, an output of which is input as input data to an input terminal 13 of a bit error tester 20. In the apparatus 20, the input data is compared, on the bit-by-bit basis, against reference data (a series of bit patterns) from a reference data generator 14 in a verifier 15 in order to detect an anticoincidence bit. The reference data generator 14 is generally arranged in the same manner as the test data generator 11 to generate the reference data in synchronism with the input data from the input terminal 13. The verifier 15 may comprise an exclusive logical sum circuit, for example, which provides an output of logical "1" for each anti coincidence bit between the input data and the reference data.

The anticoincidence bit detected by the verifier 15 that is the bit in the input data which is found to be erroneous with respect to the reference data is counted by an error bit counter 16, and the count therein is displayed on a display 17. Alternatively, the number of erroneous bits which is counted may be divided by the total number of bits in the input data (or the reference data) to provide a bit error rate in a bit error rate calculator 18 to be displayed on the display 17. Both the number of erroneous bits and the bit error rate may be displayed on the display.

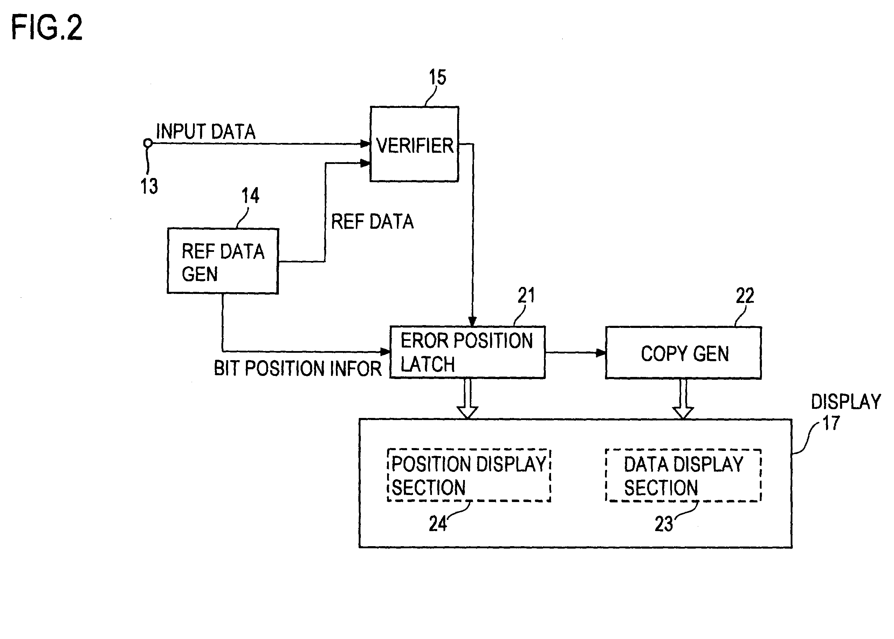

An arrangement which may be used as the bit error tester is proposed in British Patent Specification No. 2,281,136 (issued September 24, 1997). The proposed apparatus 20 is schematically shown in Fig. 2, and will be described below. Parts shown in Fig. 2 which correspond to those shown in Fig. 1 are designated by like reference characters as before. When an erroneous bit is detected in the verifier 15, information which represents the bit position in the reference data is latched from the reference data generator 14 into an error position latch 21. This bit position information is the address where the reference data is generated at the time the bit error occurred when the reference data generator 14 comprises RAM, and is equal to the content of the shift register constituting the reference data generator 14, which prevails when the bit error occurs, when the generator 14 comprises PRBS generator.

When an error bit is detected in the verifier 15, a copy generator 22 also operates to generate the error bit, a given number of bits in the reference data, which may be 28 bits, for example, which immediately precede the error bit, and another given number of bits in the reference data, which may be 3 bits, for example, which immediately follow the error bit, and the error bit as well as the given numbers of bits in the reference data which precede and follow the error bit are displayed on a data display section 23 of the display 17 while the bit position information is displayed on a position display section 24.

With a conventional bit error tester as shown in Fig. 1, only the total number of bit errors or the bit error rate can be known, but it remains unknown where in the entire input data a bit error or errors have occurred, how the bit errors are distributed and how the magnitude of occurrences is distributed.

With the conventional bit error tester as shown in Fig.2, the bit error position as well as bits in the reference data which precede and follow the error bit can be known, allowing an estimate on what bit pattern is likely to cause an error to be rendered on the basis of the reference data. However, bits in the reference data which are displayed are only those which are located adjacent to the bit error position. In practice, however, it is recognized from the analysis of occurrence of bit errors that a bit pattern status which far precedes the bit error in the test data may have an influence upon the occurrence of the bit error, and in this respect, the conventional apparatus as shown in Fig. 2 fails to elucidate the cause of the bit error. In addition, displaying the position of a single bit error and reproducing (or copying) the reference data located across the bit error cannot accommodate for the occurrence of bit errors which are located close to each other, missing some information. Finally, this prior art apparatus for detecting bit errors cannot provide a distribution of bit errors occurring and/or a distribution of the magnitude of occurrences. Japanese Laid-Open Patent Application No. 46,184/1999 (laid open February 16, 1999) discloses displaying a waveform of a time sequence of data representing input data, with an indication of a bit error at a position on the waveform where the error occurred. However, a distribution of bit errors occurring and/or a distribution of the magnitude of occurrences is unavailable with this scheme.

### SUMMARY OF THE INVENTION

In accordance with the present invention, information representing the position of a bit error is continuously recorded in record means.

The information representing the position of a bit error is displayed in a time sequence in the order it is recorded.

A bit pattern in the reference data or the input data is continuously displayed, and an error indication mark is applied to a bit in the input data which is subject to an error on the basis of the recorded bit error position information. Thus, the bit pattern in the reference data or the input data is continuously displayed together with an indication of presence or absence of bit error for each bit.

A number of errors and/or an error rate is determined for each bit position in the input data and is displayed.

A mark ratio is determined for each given number of bits in the reference data, and a relationship between the mark ratio and the number of bit errors and/or the bit error rate is displayed.

A switching indicator (the number of times data undergoes a change or a change rate) is determined for each bit group in the reference data, and a relationship between the switching indicator and bit errors is displayed.

A number of error bits and/or bit error rate is determined for each given number of fractional patterns in the reference data, and a relationship between each fraction pattern and the number of bit errors and/or bit error rate is displayed.

### BRIEF DESCRIPTION OF THE DRAWINGS

Fig. 1 is a block diagram showing a functional arrangement of a conventional bit error tester;
Fig. 2 is a block diagram showing a functional arrangement of another conventional bit error tester;
Fig. 3 is a block diagram showing a functional arrangement of an embodiment of the invention;
Fig. 4 is a chart showing an exemplary display of error bit positions obtained with the embodiment of the invention;
Fig. 5 is a chart showing an example of a simultaneous display of bit patterns and error bits according to the embodiment of the invention;
Fig. 6 is a block diagram showing an exemplary functional arrangement of data processor shown in Fig. 3 which corresponds to the display illustrated in Fig. 5.
Fig. 7 is a chart, showing another example of simultaneous display of bit patterns and bit error rates in accordance with the invention;
Fig. 8 is a flow chart showing an exemplary processing procedure for determining the bit error rate which is used in the display illustrated in Fig. 7;
Fig. 9 is a block diagram showing an exemplary functional arrangement of data processor shown in Fig. 3, corresponding to the display illustrated in Fig, 7;
Fig. 10 graphically illustrates a display of a distribution of bit error rates on the bit pattern, the mark ratio and the switching indicator for the reference data used in the embodiment of the invention;
Fig. 11 is a block diagram showing an exemplary functional arrangement of data processor 32 shown in Fig. 3, corresponding to the display illustrated in Fig. 10;
Fig. 12 is a chart of an exemplary display of fractional patterns and the number of errors according to the embodiment of the invention;
Fig. 13 is a flow chart of an exemplary processing procedure which determines the number of errors for the fractional pattern;
Fig. 14 is a block diagram showing an exemplary functional arrangement of data processor 32 shown in Fig. 3, corresponding to the display illustrated in Fig. 12;
Fig. 15 is an illustration of fractional data in relation to a frame structure:
Fig. 16 illustrates an exemplary display of the magnitude of bit errors for each fractional data illustrate in Fig. 15;
Fig. 17 is a block diagram of a device for processing each region of the frame structure data;
Fig. 18 is an illustration of an exemplary input data and error bits occurring therein;

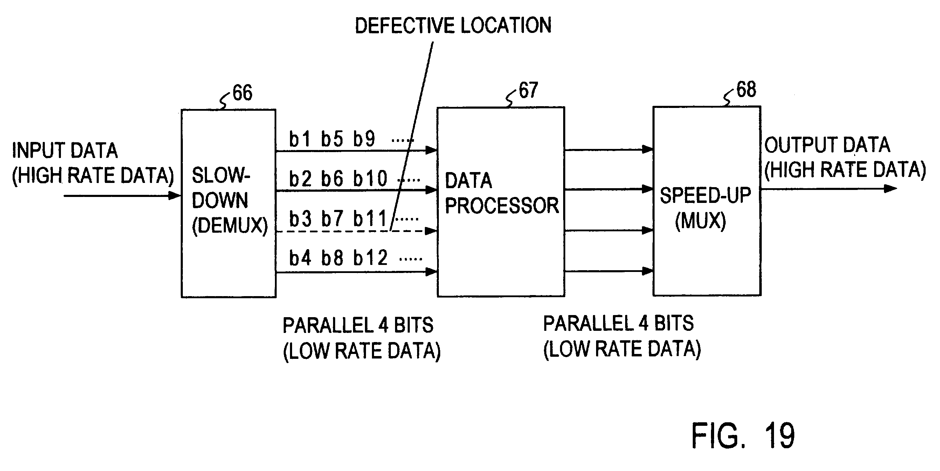

Fig. 19 is an block diagram showing an exemplary device for demultiplexing high rate data into a plurality of low rate data (fractional data) for purpose of processing;
Fig. 20 illustrates an exemplary display of bit error rates for individual fractional data when the high rate data is demultiplexed into a plurality of low rate data;
Fig. 21 is an illustration of dividing the high rate data into fractional data by bit designation;
Fig. 22 is a chart showing an exemplary display of the magnitude of bit errors for each fractional data which is obtained in the manner illustrated in Fig. 21;
Fig. 23 is a block diagram showing an exemplary functional arrangement when the display indicated in Fig. 5 or 7 is to be provided by a computer;
Fig. 24 is a flow chart of an exemplary processing procedure when the display illustrated in Fig. 5 is to be provided by a computer; and
Fig. 25 is a flow chart of an exemplary processing procedure when the display indicated in Fig. 7 is to be provided by a computer.

### DESCRIPTION OF A PREFERRED EMBODIMENT

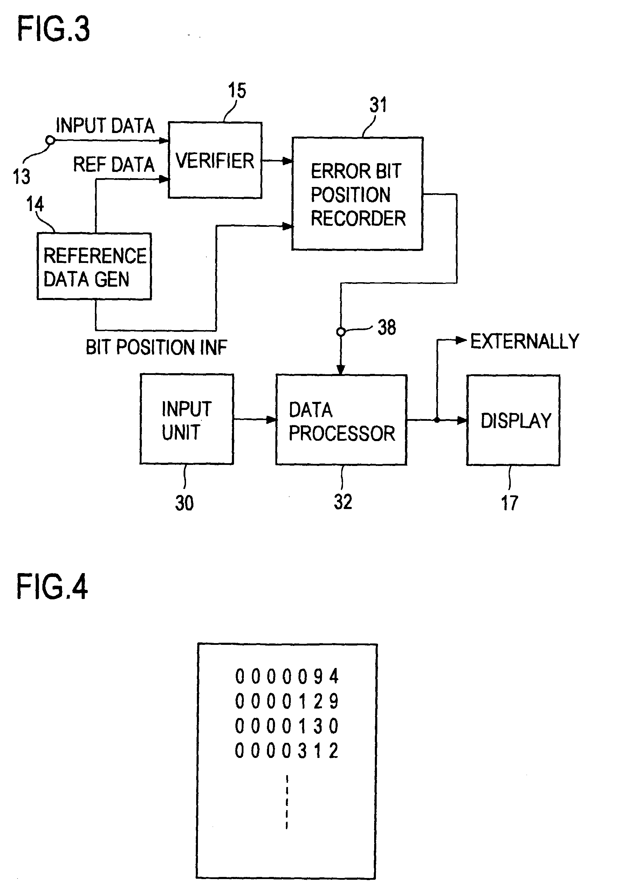

Fig. 3 shows an embodiment of the invention, and parts corresponding to those shown in Figs. 1 and 2 are designated by like reference numerals. In accordance with the invention, input data and reference data are verified in a verifier 15, and when an anticoincidence is detected, information representing the position of the anticoincidence bit on the reference data (or the sequence of bit patterns) is obtained from bit position information that is provided by a reference data generator 14 at that point in time, and such information is continuously recorded on an error bit position recorder 31 in the sequence of occurrence of error bits.

After a series of input data is input through a one complete run or through a plurality of runs, the error bit position information is successively derived from the error bit position recorder 31, processed in a data processor 32 and displayed on a display 17. The processing applied in the data processor 32 will be described later, but it is to be noted that this includes a processing of error bit position information itself and a processing needed to display it on the display 17.

As shown in Fig. 4, for example, the error bit positions are displayed on the display 17 in the sequence the error occurs. In this instance, the bit position is indicated by choosing the first bit in the bit stream of the reference data as the first, the next bit as the second and so on.

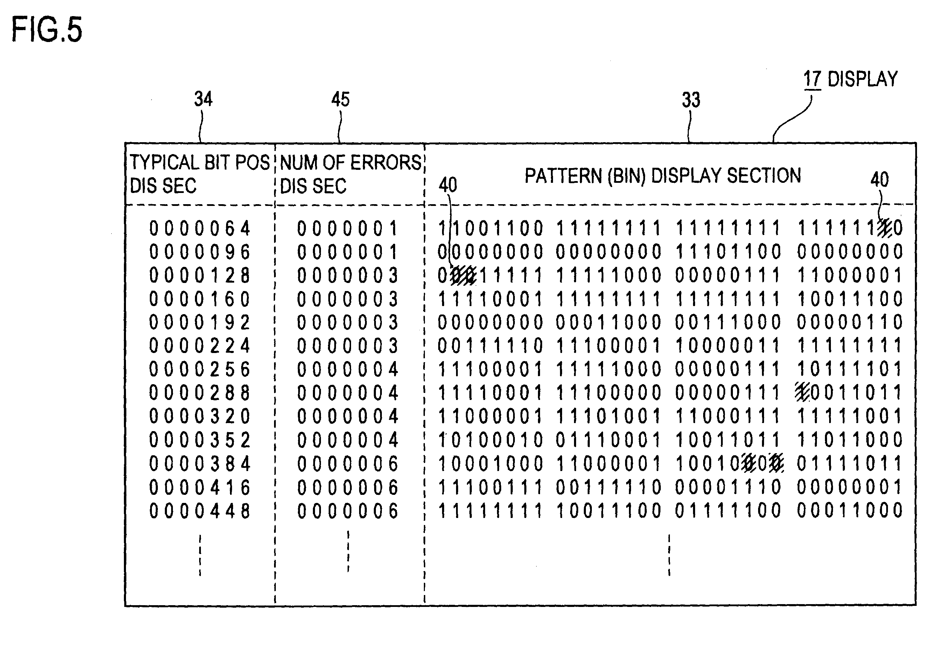

As shown in Fig. 5, for purpose of display, the screen of the display 17 may be divided into a pattern display section 33, a typical bit position display section 34 and a number of errors display section 35. The pattern display section 33 displays individual bits in the reference data in the sequence of their occurrence beginning from the upper top end of the display section 33 to the right in the form of an array, and when the right end is reached, the display continues to the next lower row, again proceeding from the left end toward the right end, and such array is subsequently repeated. The bit position of the initial bit in each row in this array display of the reference data ( representing the position on the bit stream of the reference data) is indicated in the typical bit position display section 34 in the same row as the pattern display section 33. The example given represents a case where the quantity of data to be displayed is too many to be displayed on the display 17, and accordingly old data is removed from display or the display is scrolled upward on the screen to cause old data which is located in the top portion to be overflow. In the example shown, the bit position of the left end of the first row in the pattern display section 33 is 0000064, which is displayed in the typical bit position display section 34 in the first row. Since each row contains 32 bits to be displayed, the bit position at the left end of the second row is indicated as 0000096, which is displayed in the typical bit position display section 34 in the second row. In the bit pattern display of the reference data in the pattern display section 33, the occurrence of an error is indicated by a mark, which is shown as a hatched indication, overlaid with the bit indication corresponding to the error bit in the input data, thus indicating that the bit error occurred at this position. Specifically, the hatched indication 40 is applied to the bit "1" which is the second as counted from the right in the first row, indicating that this bit is erroneous.

In this example of display, for each row of the bit pattern display, cumulative total of error bits is displayed in the number of errors display section 35. In the example shown, the number of errors display section 35 indicates that the cumulative total of error bits from the beginning of the bit stream of the reference data is equal to 1 up to the first and the second row of the pattern display section 33, but there are two bits, indicated as errors,in the third row of the pattern display section 33. This is denoted as 0000003 in the third row of the number of errors display section 35. The mark which represents an error bit is not limited to the hatched indication 40, but, for example, an error bit may be displayed in an attractive color such as red while a normal bit may be displayed in white color, and a variety of approaches are applicable.

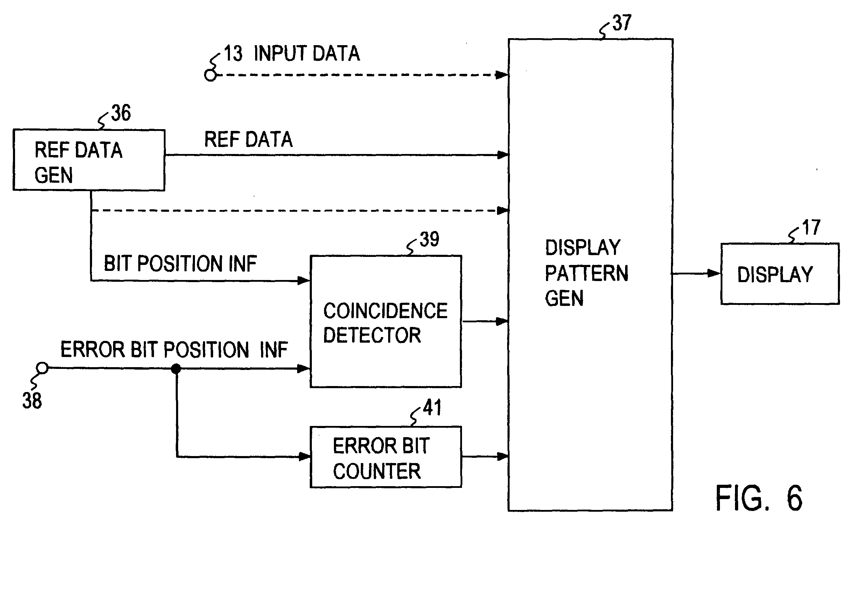

To provide a display as shown in Fig. 5, the data processor 32 may be arranged as shown in Fig. 6, for example. Specifically, the data processor 32 includes a reference data generator 36 which is similar to the reference data generator 14, and reference data generated by the generator 36 is input to a display pattern generator 37 to process the reference data so that the reference data can be displayed on the display 17 in the manner as shown by the pattern display section 33 of Fig. 5. In addition, error bit position information which is read from the error bit position recorder 31 shown in Fig. 3 and applied to a terminal 38, and the bit position information from the reference data generator 36 are compared against each other in a coincidence detector 39, and upon detecting a coincidence, the display pattern generator 37 processes this result in a manner such that an error indication (such as the hatched indication 40 shown in Fig. 5) be applied to the corresponding bit indication on the bit pattern display section 33. The coincidence detector 39 constitutes means which determines an error bit in the input data on the basis of the error bit position information fed from the terminal 38. The reference data generator 36 may be replaced by the reference data generator 14. Alternatively, the reference data generator may be implemented in a software.

The number of the error bit position information fed from the terminal 38 is counted by an error bit counter 41. The display pattern generator 37 operates to provide a processing so that an indication in the typical bit position display section 34 as shown in Fig. 5 be provided to the display 17 on the basis of the number of bits in the reference data which is input and an indication to be given in the number of errors display section 35 as shown in Fig. 5 be provided to the display 17 on the basis of the number of bits in the reference data which is input and the count of error bits which are counted by the error bit counter 41.

Specifically, since the number of bits in each row of the pattern display section 33 is equal to 32 in the example shown in Fig. 5, the display pattern generator 37 may count the number of bits in the reference data which is input, and sequentially display the count on each row of the typical bit position display section 34 each time the count becomes equal to 32n ( n=1,2,3,···). It is assumed that the leading bit of the bit stream of the reference data is numbered as 0. Also the display pattern generator 37 may perform a processing operation such that each time the count of the number of bits in the reference data which is input becomes equal to 32n (n=1,2,3,···), the count in the error bit counter 41 be sequentially displayed on each row of the number of errors display sections 35. Alternatively, rather than counting the number of bits in the reference data which is input, the bit position information from the reference data generator 36 may be input to the display pattern generator 37, as indicated in broken lines in Fig. 6, and the display pattern generator 37 may provide a display of the typical bit position or the number of errors each time the bit position information which is input assumes 32n.

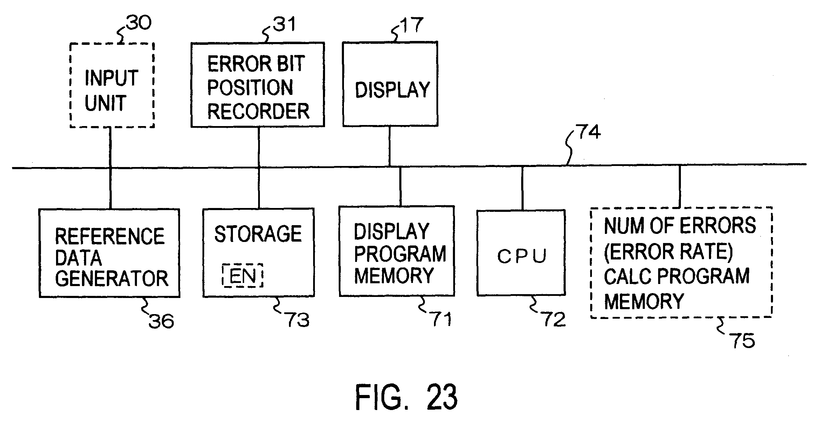

The function of the data processor 32 may be performed by a computer. By way of example, Fig. 23 shows that a display 17, an error bit position recorder 31, a reference data generator 36, a memory 71 which stores a display program, CPU 72, and a storage 73 which may be used as a working memory are connected to a bus 74 so that CPU 72 executes the display program stored in the memory 71 to provide a display as indicated in Fig. 5.

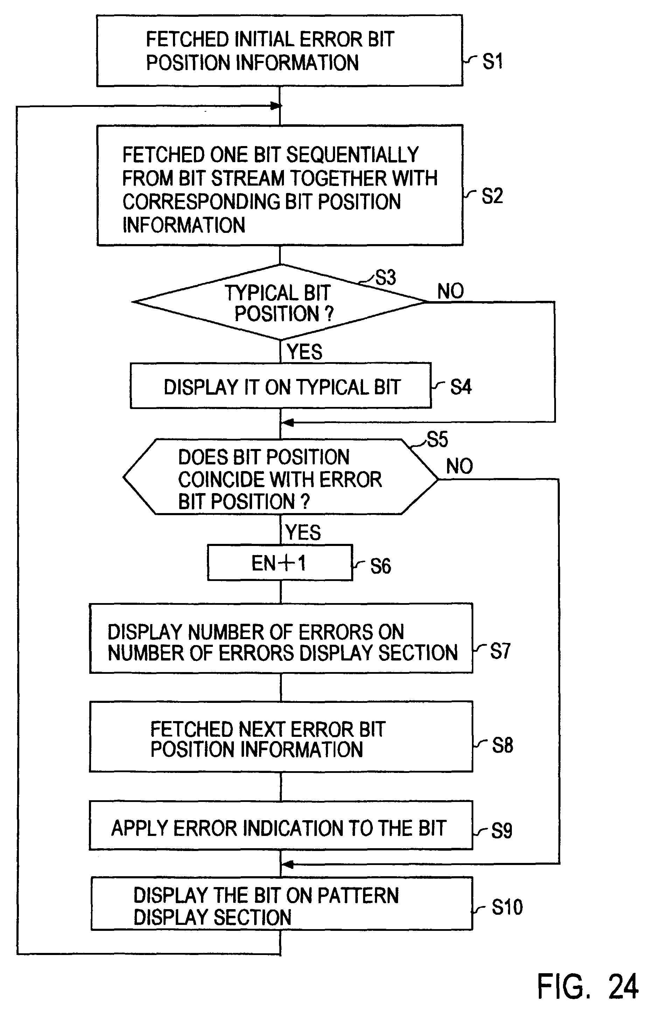

An exemplary processing procedure which provides a display in this manner is shown in Fig. 24. Initial error bit position information is fetched from the error bit position recorder 31 (S1). One bit is fetched from the bit stream which is generated by the reference data generator 36, beginning with the leading bit and the corresponding bit position information is also fetched (S2). It is examined if the fetched bit position information is a typical bit position (S3), and if it is , the bit position information is displayed on the typical bit position display section 34 (S4).

It is then examined if the fetched bit position information coincides with the fetched error bit position information (S5). If it coincides, the number of errors EN is incremented by one (S6) (the number of errors EN is previously initialized to 0), and the incremented number of errors EN is displayed on the number of errors display section 35. Alternatively, the number of errors at the corresponding location of the number of errors display section 35 is updated to the value which is determined at step S6 (S7). It is to be understood that the number of errors EN will be stored in the storage 73, for example. The next error bit position information is fetched from the error bit position recorder 31 (S8), and the error indication is applied to one bit which is fetched at step S2 (S9). The fetched bit is displayed on the pattern display section 33, subsequently returning to step S2 (S10). If the bit position information which is fetched at step S3 is not a typical bit position, the operation transfers to step S5. If the bit position information which is fetched at step S5 does not coincide with the error bit position information, the operation transfers to step S10.

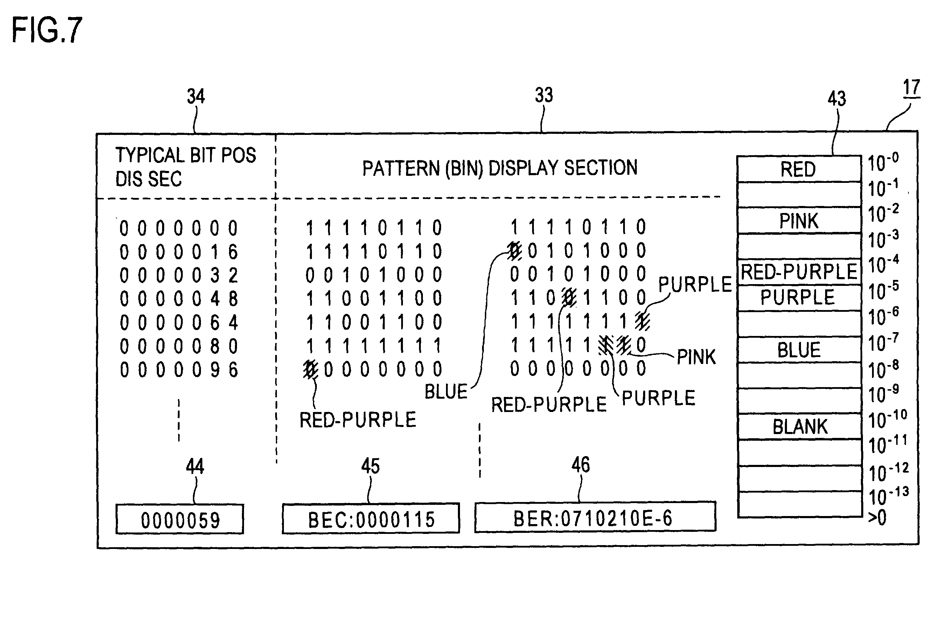

Fig. 7 shows another example of display. The reference data is displayed on the pattern display section 33 in the order of the bit stream, in the same manner as in Fig. 5, and information representing the bit position of the left end of each row is displayed on the typical bit position display section 34. In this embodiment, an indication representing an error bit which is provided in the pattern display section 33 is given by hatched indications 40p, 40b···in different colors which depend on the bit error rate. Because the color representation can not be indicated on the drawing, the color discrimination is given by attaching a letter "blue" to the bit which is to be applied with the blue hatched indication 40b. The display 17 includes a display section 43 in the right end of the screen which indicates a relationship between the bit error rate and the color used in the display. Squares in different colors are disposed in a vertical array, and a bit error rate which is indicated by the color is given to the right of a square of each color. Because the color representation cannot be given on the drawing, letters representing the colors are entered in the squares. In the example shown, an arrangement is made such that when a marker on the screen is moved as by a mouse, which is then clicked to designate a particular bit display, the bit position information of the designated bit is given in a display section 44, the number of error bits BEC at that bit position is given in a display section 45 and the bit error rate at that bit position is given in a display section 46, all of which are located on the bottom of the screen. The number of particular bits which are designated by the marker is not limited to one, but a plurality of bits may be designated, and the bit positions, the number of error bits or bit error count BEC and the bit error rate BER of these bits may be displayed. In some instance, BEC and BER may be displayed for all error bits. Also, such display may be given in a manner to indicate only one of BEC and BER. The designation of the particular bit takes place by an entry from an entry section or input unit 30 into the data processor 32 shown in Fig. 3. In Fig. 7, E-6 given in the BER display section 46 means 10⁻⁶.

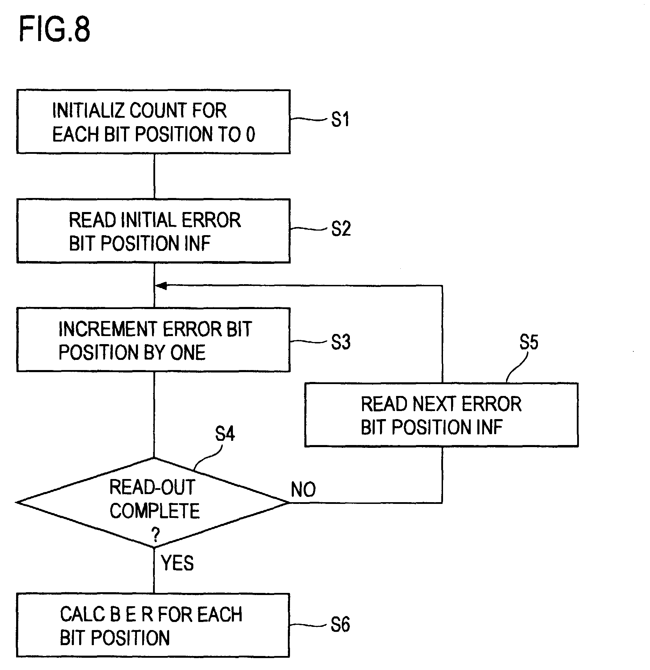

To obtain the number of errors and /or error rate for each bit position, a processing procedure as shown in Fig. 8, for example , may be followed. Initially, in a storage which is provided within the data processor 32 (Fig. 3) , the number of errors for each bit position is initialized to 0 (S1), the initial error bit position information is read from the error bit position recorder 31 (S2), the number of errors at the error bit position of the storage is incremented by one (S3) , it is then examined if the read-out from the recorder is completed (S4), and if the read-out is not completed, the next error bit position information is read from the recorder 31 (S5), thus returning to step S3 and incrementing the number of errors at the error bit position in the storage by one. In the similar manner, when all of error bit position information is read (S4), the number of errors for each bit position which is stored in the storage is read to calculate the bit error rate for each bit position (S6). In this instance, a given test data is repeatedly transmitted and thus a comparison with the input data takes place a plurality of times for the same bit position in the given reference data.

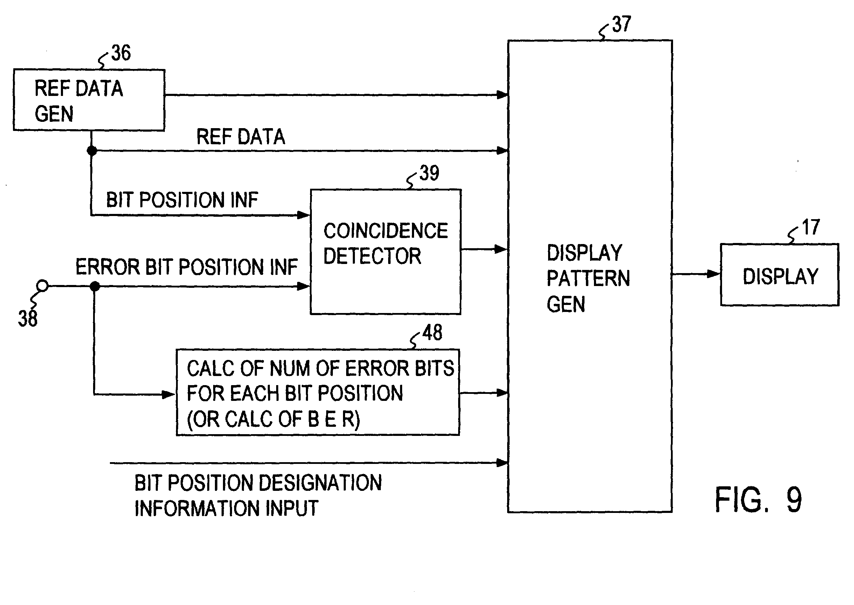

An example of the data processor 32 which is used at this end is shown in Fig. 9. The data processor 32 may use a number of errors calculator 48 which calculates the number of errors for each bit position by performing the procedure shown in Fig. 8, in place of the error bit counter 41 shown in Fig. 6. If desired, the calculator 48 may calculate a bit error rate. Rather than displaying the bit on the pattern display section 33 shown in Fig. 7 in different colors depending on the bit error rate, the bit may be displayed in different colors depending on the number of errors which prevails at that bit position. To provide a display on the display sections 44 to 46 as illustrated in Fig. 7, bit position designation information which designates the bit position by a marker is also input to the display pattern generator 37.

In this instance, the function of the data processor 32 may be performed by allowing a computer to execute a corresponding program. In such instance, a memory 75 which stores a program for calculating a number of errors and an error rate and an input section 30 are connected to the bus 74, as indicated in broken lines in Fig. 23, and the display program stored in the memory 71 is prepared to provide the display illustrated in Fig. 7.

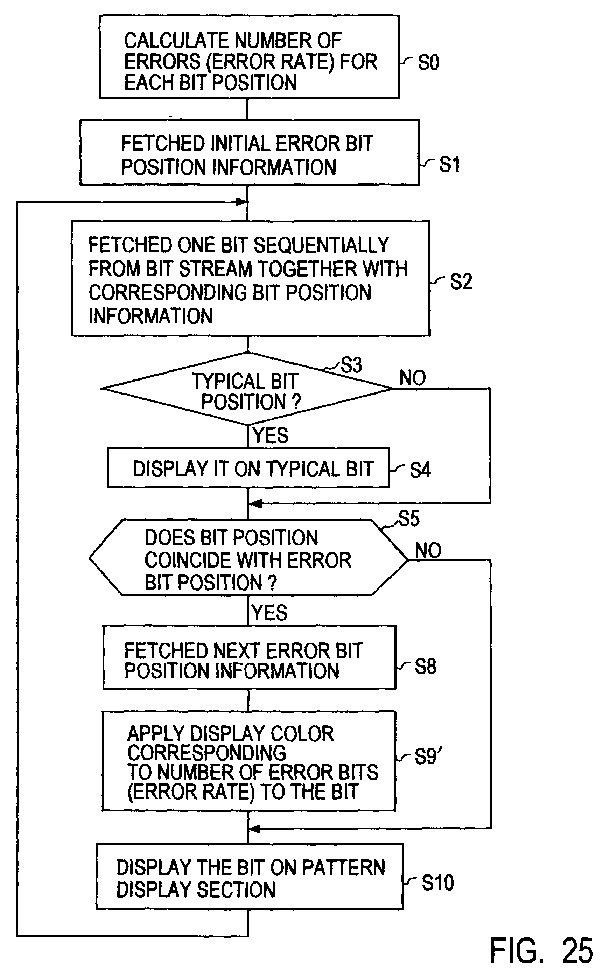

A resulting processing procedure is shown in Fig. 25. Initially, the number of errors (or error rate) calculation program stored in the memory 75 is executed or the processing indicated in Fig. 8 is performed to determine the number of errors (error rates) for each bit position, and the result obtained is stored in the storage 73 (S0), and then steps S1, S2, S3, S4, and S5 which are similar to the corresponding steps shown in Fig. 24 are performed. At step S5, if the fetched bit position information coincides with the fetched error bit position information, steps S6 and S7 shown in Fig. 24 are skipped to execute step S8. Subsequently, the number of errors (error rates) which is stored in the storage 73 is read using the corresponding bit position information to apply a color of display which corresponds to the number of errors ( error rate) to the bit which is fetched at step S2 (S9'), followed by displaying the bit on the pattern display section 33 in the similar manner as occurs at step S10 in Fig. 24.

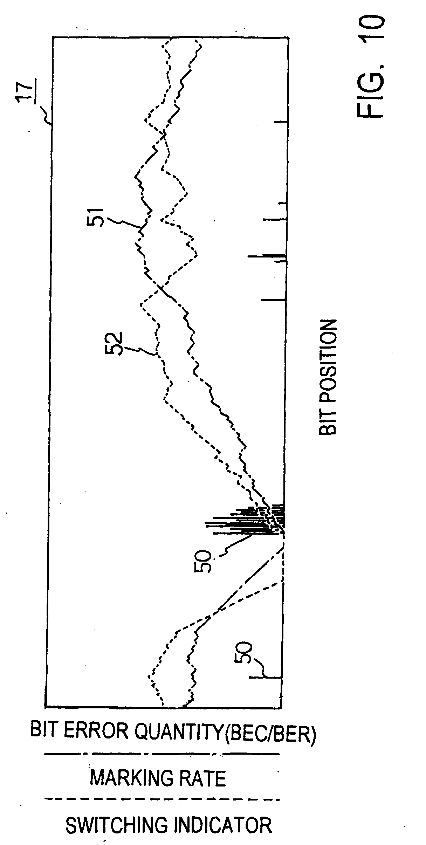

As shown in Fig. 10, the bit position may be defined on the abscissa and the bit error situation, namely, the presence or the absence of a bit error, a bit error count (BEC),or a bit error rate (BER) may be chosen on the ordinate to display the bit error situation on the display 17. In the illustration, BEC or BER is indicated by a vertical line indication 50. In this example, a mark ratio is obtained for a given number of bits in the reference data, for example, for every 32 or 64 bits, and the determination of the mark ratio may be sequentially repeated while displacing the group by one bit or a plurality of bits to provide a mark ratio curve 51. In addition, a switching indicator (the number of times a bit changes or a change rate) may be determined for a given number of the bits in the reference data, for example, every 32 or 64 bit, and the switching rate may be repeatedly determined while sequentially displacing the group by one bit or a plurality of bits, thus providing the switching indicator as a curve 52.

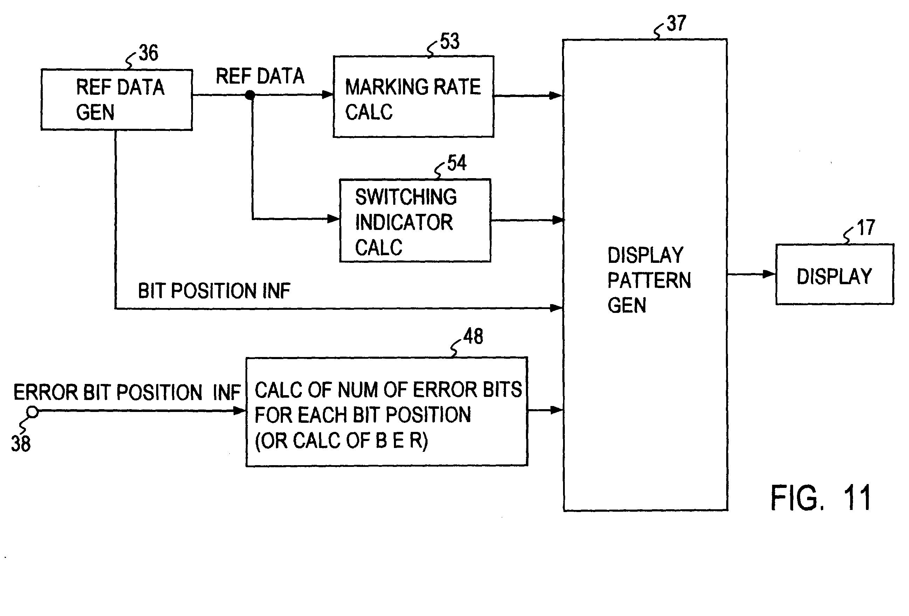

A data processor 32 which provides the display as shown in Fig. 10 may be arranged as shown in Fig. 11, for example. A mark ratio calculator 53 calculates the mark ratio for the group of given bits in the reference data which is supplied from the reference data generator 36 and repeats the calculation while displacing the group by one bit, and the result is fed to the displaying pattern generator 37. A switching indicator calculator 54 determines the switching indicator for the given bit group in the reference data and such calculation is repeated while sequentially displacing the group by one bit, and the result is fed to the display pattern generator 37. The calculator 48 determines the number of errors or the bit error rate for each position and feeds it to the display pattern generator 37. If required, the bit position information from the reference data generator 36 is also fed to the display pattern generator 37. The storage for counting the number of errors for each bit position as described above in connection with Fig. 8 is contained in the calculator 48 which determines the number of error bits for each bit position.

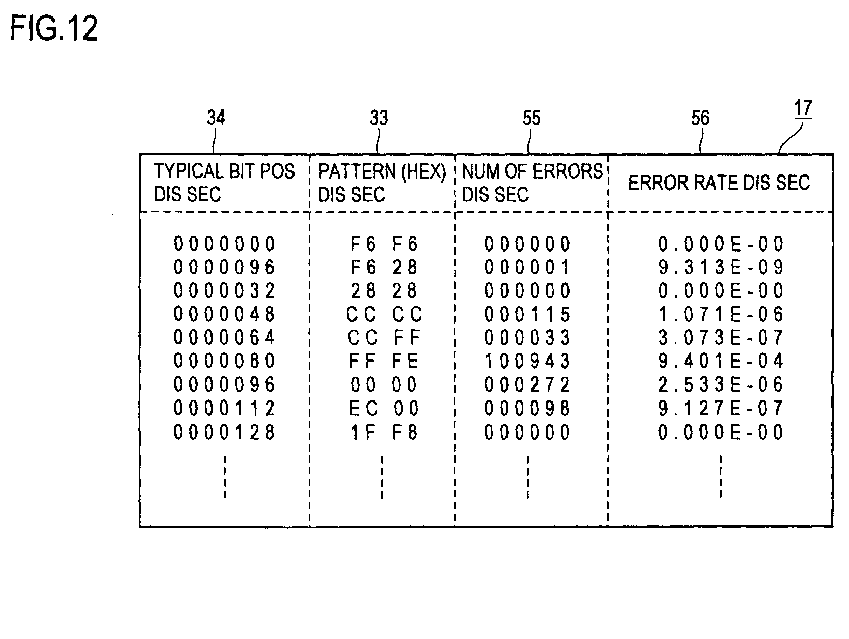

Fig. 12 illustrates a display technique. In the example shown, the display 17 includes a pattern display section 33, a typical bit position display section 34, and in addition includes a number of errors display section 55 and an error rate display section 56. The pattern display section 33 displays four bits hexadecimal notation instead of displaying the bit pattern directly. Thus "F6 F6" appearing on the first row represents "1111 0110 1111 0110" . In addition, the reference data is sequentially divided into a group including a given number of bits, which is 16 bits in the example shown, to define fractional data. The number of error bits which is determined for each fractional data is displayed in the number of errors display section 55, and the bit error rate is displayed in the error rate display section 56. Data for each fractional data is displayed in one row, and information representing the position of the leading bit is displayed in the typical bit position display section 34. While each fractional data comprises 16 bits, the test data is repeatedly transmitted, and it will be noted that at some location, the number of errors is greater than 16.

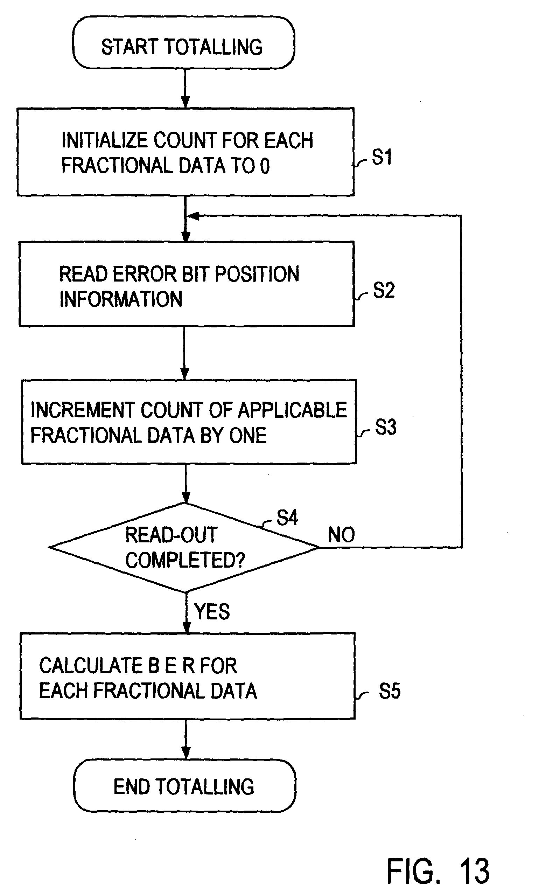

An example of a processing procedure which calculates the bit error rate for each fractional data is shown in Fig. 13. A storage (not shown) within the data processor 32 has a number of errors or a count store for each fractional data. Initially, the count for each fractional data is initialized to 0 (S1), error bit position information is read (S2), the count for the applicable fractional data in the store is incremented by one (S1), it is examined whether read-out of the error bit position information is completed, and if not (S4), the operation returns to step S2, and if the read-out is completed, the count representing the number of errors for each fractional data which is stored in the store is read to calculate the bit error rate for each fractional data (S5).

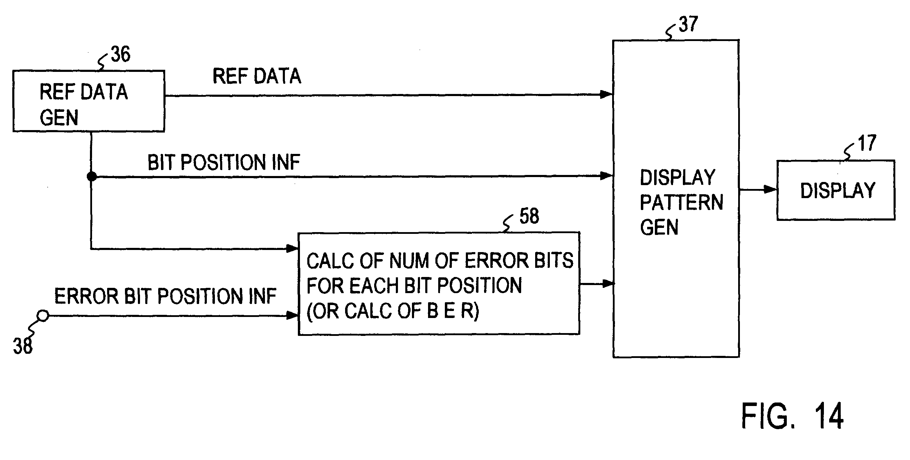

A data processor 32 which determines the number of error bits or the bit error rate for each fractional data may be arranged as shown in Fig. 14, for example. Specifically, reference data from the reference data generator 36 is fed to the display pattern generator 37. Bit position information from the reference data generator 36 and the error bit position information which is read from the terminal 38 are input to a calculator 58 which calculates the number of error bits for each fractional data. The calculator 58 executes the processing operation illustrated in Fig. 13, and the error bit count for each fractional data, and the bit error rate if required are input to the display pattern generator 37 to provide a display as shown in Fig. 12 on the display 17. The bit position information from the reference data generator 36 is input to the calculator 58 which calculates the error bit count for each fractional data to relate each position to some fractional data. The store described above in connection with Fig. 12 and which is used to count the error bit count for each fractional data is provided within the calculator 58 which determines the error bit count for each fractional data.

When the reference data or the input data is divided into a plurality of fractional data, and a bit error count is determined for each fractional data, the division into the fractional data may take place according to a variety of techniques mentioned below.

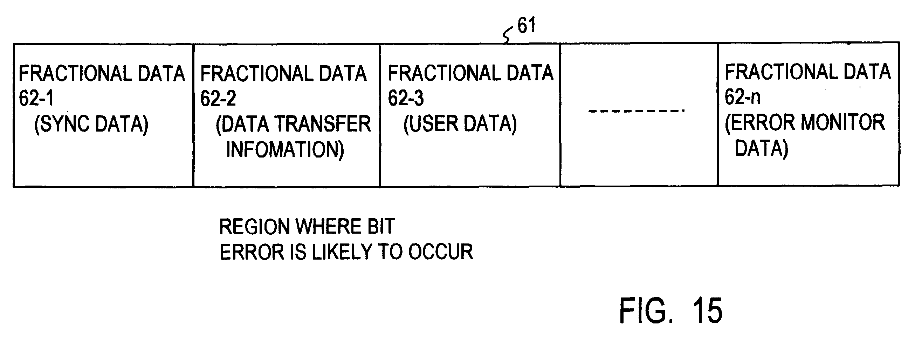

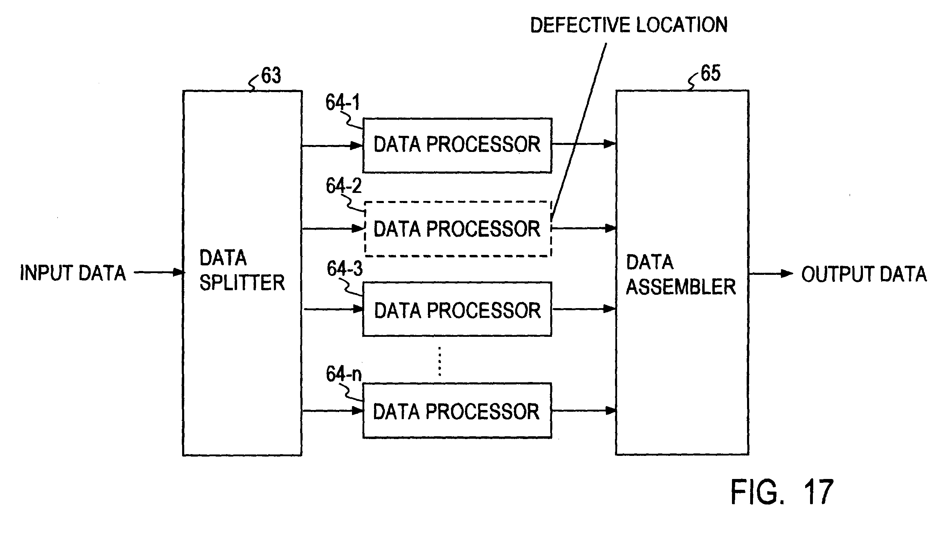

Specifically, where the input data is a predetermined frame-structured data 61 as shown in Fig. 15, the data in each region of the frame represents fractional data. In the example shown, leading sync data represents fractional data 62-1, next data transfer information (address) represents fractional data 62-2, user data represents fractional data 62-3···, and last error monitor data represents fractional data 62-n, thus dividing the input data into a plurality of fractional data. When the input data is divided into fractional data 62-1 to 62-n, error bit position information may be continuously obtained, and error bit position information may be read from the recorder 31 (Fig. 3) to apply a processing operation which is similar to that mentioned above in connection with Fig. 13, thus determining a quantity of bit error for each fractional data. An example of displaying an error quantity for each fractional data is given in Fig. 16. Specifically, the pattern display section 33 shown in Fig. 12 corresponds to a segment display section 59, where segments corresponding to various fractional data such as sync data, data transfer information are displayed.

The frame-structure data may also be arranged as follows:

For example, as shown in Fig. 17, a data splitter 63 splits the input data into fractional data 62-1, 62-2, ···,62-n, all of which are processed in data processors 64-1 to 64-n and results of processing by the data processors 64-1 to 64-n are input to a data assembler 65 to be assembled into the frame-structured data as shown in Fig. 15 for purpose of delivery. This output data may be subject to the bit error detection as divided for fractional data in the manner mentioned above. For example, if the fractional data 62-2 (data transfer information) as shown in Fig. 16 has a particularly significant bit error quantity or bit error rate, an estimation can be allowed that the data processor 64-2 shown in Fig. 17 would be defective.

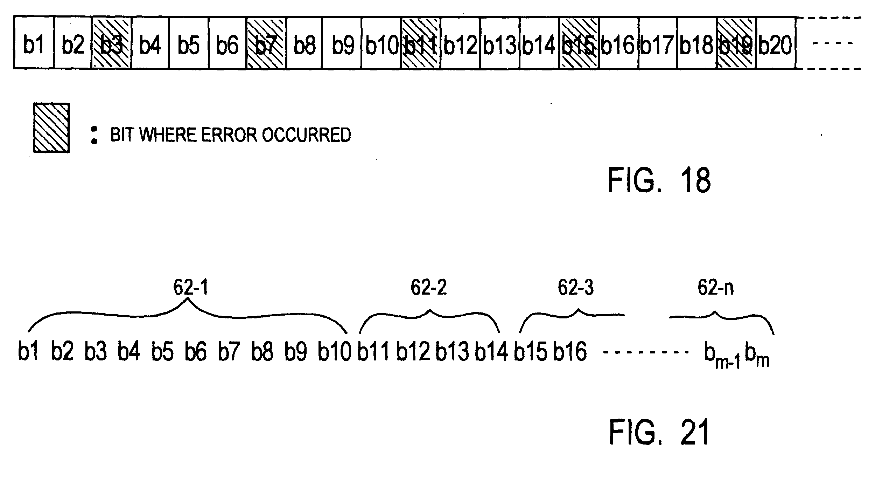

Alternatively, the input data as shown in Fig. 18 may be input to a slow-down unit (demultiplexer) 66 to distribute the individual bits sequentially to four output lines in a repeated manner, thus converting the input data into a first to a fourth parallel low rate data or four fractional data 62-1 to 62-4, which are then processed in a data processor 67, and the processed first to fourth parallel low rate data are multiplexed into a single high rate data in a multiplexer 68 for purpose of delivery. In this manner, a complicated processing operation can be performed at a lower rate in the data processor 67.

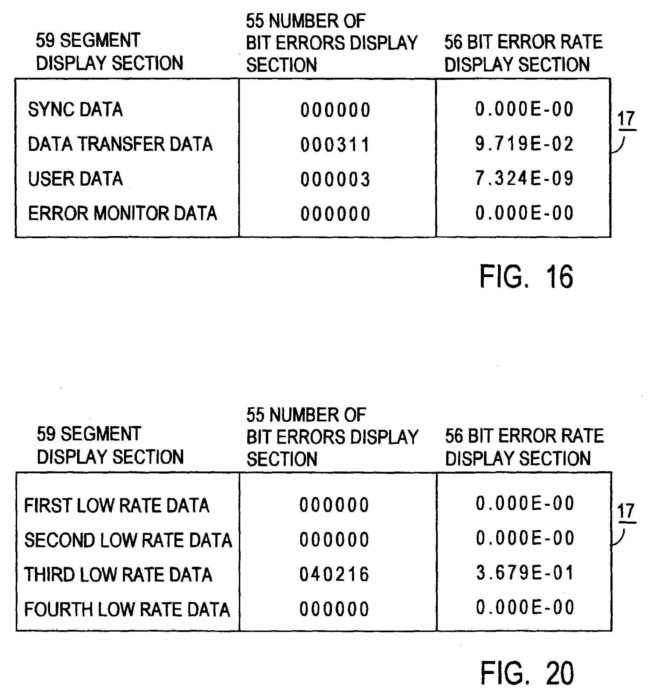

Again, the bit error position information may be obtained for the high rate output data while the bit error quantity can be obtained from the first to the fourth low rate data which are divided by the slow-down unit 66 or from the fractional data 62-1 to 62-4 on the basis of the bit error position information. Assuming that bits which are shown hatched in Fig. 18 have a bit error, a result of determination would be displayed in a manner such that the third low rate data (fractional data 62-3) has a pronounced bit error count and bit error rate as illustrated in Fig. 20, for example, allowing an assessment that the data processor 67 which processes the third low rate data has a defective portion in a facilitated manner.

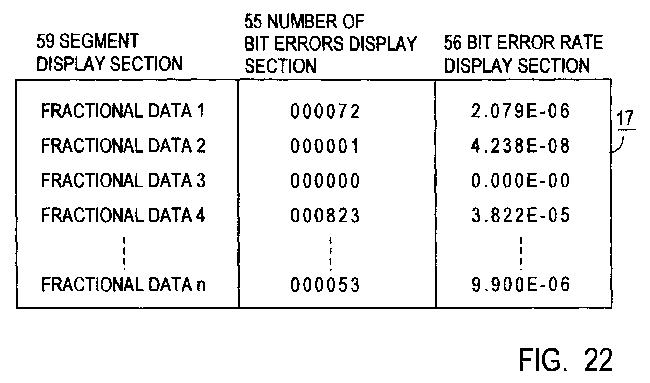

Alternatively, user may designate particular bits in the input data as by an entry from the input unit 30 shown in Fig. 3 which may comprise a keyboard to divide the input data into fractional data. By way of example, Fig. 21 indicates that by designating bits b10, b14···fractional data may be defined between adjacent bits which are sequentially designated, providing fractional data 62-1 for bits b1 to b10 and fractional data 62-2 for bits b11 to b14. A display of the error quantity for each fractional data is illustrated in Fig. 22.

For any form of fractional data, each bit position information can be related to fractional data to which such bit belongs depending on the form of the fractional data, whereby the bit error quantity can be determined for each fractional data by utilizing the bit error position information which is continuously recorded according to the procedure shown in Fig. 13. For any form of fractional data, relating a particular bit position to some fractional data can be achieved by calculation or by reference to a table which is previously prepared to relate the bit position and the fractional data. The error situation for each fractional data of any form may be displayed in the manner shown in Fig. 10. In this instance, the abscissa represents the position of fractional data. The mark ratio and/or switching indicator can be similarly displayed.

In the foregoing description, the error bit position information which is recorded in the error bit position recorder 31 shown in Fig. 3 represents the address of a bit which is then occurring when the reference data generator 14 comprises RAM, and is the content of a shift register which prevails at such time or a phase difference from a given pattern when the reference data generator comprises PRBS. When the reference data generator 14 uses RAM and PRBS in a time sharing manner, the error bit position information is the bit position information which corresponds to the one being used. The bit position information which is displayed on the display 17 is the address of the bit as converted into a decimal number when RAM is used. When PRBS is used, in order to obtain the bit position information from the content of the shift register, a characteristic polynomial is applied to a given pattern repeatedly until a pattern which coincides with the error bit position information appears, and the number of calculations is chosen as representing the bit position information. Alternatively, a technique which determines the phase difference of M-series from the given pattern and the content of the shift register may be used. Where the obtained error bit position information is in the form of a phase difference from a given pattern, that value is displayed as the bit position information.

In the foregoing description, the function of a data processor may be replaced by a CPU, which reads, interprets and executes the program so as to perform the function.

In Figs. 5 and 7, the bit pattern being displayed may be the input data. In this instance, the input data from the input terminal 13 is input to the display pattern generator 37, as indicated in broken lines in Fig. 6, for example. The input data is input after it is temporarily stored in a storage as required.

As discussed above, in accordance with the invention, information representing the position of an error bit is continuously recorded. Accordingly, a distribution of error bit positions on the bit stream of the reference data can be known from the observation of the error bit position information. For example, when bit errors occur in a burst manner, this can be recognized immediately, and where on the bit stream it occurred can be known.

When the bit patterns in the input data or the reference data are continuously displayed, and the error bit is displayed with a mark, as shown in Fig. 5, it is possible to recognize the pattern behaviour, before and after the error bit, in particular, the pattern preceding it as well as its relationship with the bit error.
In addition, an influence of a pattern which far precedes the error bit can also be recognized. In this manner, a cause of an error in the input data can be identified and it becomes possible to correct it in a reliable manner.

In addition, error bit position information is continuously derived and displays as shown in Figs. 5, 7 or 12 are provided. Accordingly, if bit errors occur in succession, the resulting bit errors as well as the bit patterns which precede and follow them can be displayed without any failure or missing them.

Using the display shown in Fig. 10, the relationship between the error bit positions, their distribution and the number of errors on one hand and the mark ratio or the switching indicator in the reference pattern can be recognized. It will be seen from Fig. 10 that a number of bit errors occur in a area where the mark ratio is low and the switching indicator is small.

In addition, the display shown in Fig. 12 allows the error bit count and the bit error rate to be known for each fractional pattern in the reference data.

While the present invention has been described with regard to the preferred embodiments shown by the way of example, it will be apparent to those skilled in the art that various modifications, alterations, changes, and/or minor improvements of the embodiments described above can be made without departing from the spirit and the scope of the present invention. Accordingly, it should be understood that the present invention is not limited to the embodiments shown and described above, and is intended to encompass all such modifications, alterations, changes, and/or minor improvements falling within the scope of the invention defined by the appended claims.

## Claims

1. An apparatus for measuring bit errors in which input data and reference data are verified in verifier means to detect a bit error in the input data; comprising
a recorder for continuously recording information representing the position of an error bit which is detected by the verifier means.

2. An apparatus according to Claim 1, further comprising
a display for displaying the error bit position information which is recorded in the recorder in a time sequence in the order it is recorded.

3. An apparatus according to Claim 1, further comprising
a display for displaying a bit pattern of either the reference data or the input data and for displaying the presence or absence of a bit error for each bit.

4. An apparatus according to Claim 1, further comprising
means to which the input data is input repeatedly, said means determining a bit error count and/or a bit error rate for each bit position during the repetition on the basis of the error bit position information.

5. An apparatus according to Claim 4, further comprising
display means for displaying a bit error count or a bit error rate for each bit while displaying a bit pattern of either one of the reference data or the input data.

6. An apparatus according to Claim 5, in which the display means displays the bit error count or the bit error rate for each bit in different colors depending on the magnitude of the bit error count or the bit error rate.

7. An apparatus according to Claim 1, further comprising
means for dividing one of the reference data and the input data into a plurality of fractional data and for determining a bit error count and/or a bit error rate for each fractional data on the basis of the error bit position information.

8. An apparatus according to Claim 7, further comprising
means for displaying a bit error count and/or a bit error rate for each fractional data.

9. An apparatus according to Claim 7, in which each fractional data comprises data in each region of a predetermined data structure.

10. An apparatus according to Claim 7, in which each fractional data comprises a bit stream which is separated according to a multiplexing /demultiplexing rule.

11. An apparatus according to Claim 7, in which each fractional data comprises data which are delineated between designated bit positions.

12. An apparatus according to Claim 1, further comprising
means for calculating a mark ratio for a given group of bits in the reference data;
and display means for displaying the calculated mark ratio together with a bit error situation of one of corresponding bits in the reference data and the given group of bits.

13. An apparatus according to Claim 1, further comprising
means for determining one of a bit error count and a bit error rate for one of bits in the reference data and a given group of bits, and providing a result to serve as a bit error situation.

14. An apparatus according to Clam 1, further comprising
means for calculating a switching indicator from each group of bits in the reference data;
and display means for displaying the calculated switching indicator together with a bit error situation of one of corresponding bits in the reference data and the given group of bits.

15. An apparatus according to Claim 14, further comprising
means for determining one of a bit error count and a bit error rate for one of bits in the reference data and the given group of bits and for providing the result as the bit error situation.

16. A method of measuring bit errors in which input data and reference data are verified against each other to detect a bit error in the input data, comprising steps of
recording information representing the position of a detected error bit continuously in a recorder;
and displaying a bit pattern of one of the reference data and the input data and applying an error indication to an error bit on the basis of the error bit position information.

17. A method according to Claim 16 in which one of a bit error count and a bit error rate is determined for each bit position on the basis of the error bit position information, and different indications are applied to the error bit depending on one of the bit error count and the bit error rate thus determined.
